# EUROPÄISCHE PATENTANMELDUNG

(11) **EP 1 149 863 A1**
(43) Veröffentlichungstag der Anmeldung: **31.10.2001**
(21) Anmeldenummer: 01108786.3
(22) Anmeldetag: 07.04.2001
(51) Int. Cl.: C08K 3/34

(54) **Farbloses, emissionsarmes Polymer**

(30) Priorität: 27.04.2000 DE 10020621
(71) Anmelder: Degussa AG, 40474 Düsseldorf (DE)
(72) Erfinder: Heindl, Frank, 63517 Rodenbach (DE); Maier, Hans-Josef, 63755 Alzenau (DE); Sextl, Elfriede, dr., 63826 Geiselbach (DE)

(57) **Zusammenfassung**

Emissionsarme Polymere, welche mindestens einen Zeolith vom Strukturtyp ZSM-5 enthalten.

## Beschreibung

Die Erfindung betrifft farblose Kunststoffe, die aufgrund eines Zusatzes von speziellen Additiven nur geringste Mengen an unerwünschten organischen Verbindungen freisetzen. Als unerwünschte Substanzen werden dabei insbesondere Geruchs- und Geschmacksstoffe berücksichtigt.

In der heutigen Zeit gewinnen Kunststoffe eine immer größere Bedeutung im täglichen Leben. Eine immer größere Anzahl an Getränken und Nahrungsmitteln wird in Kunststoffbehältern transportiert und gelagert. Beispielsweise ist heute die Tendenz zu erkennen, dass Mehrwegflaschen aus Glas für Getränke aller Art mehr und mehr durch Einweg-, aber auch Mehrwegverpackungen aus Kunststoffen ersetzt werden.

Bei Verwendung von Kunststoffverpackungen für Lebensmittel sind strenge Anforderungen an das Material zu stellen. Emittiert das Material Geschmacks- und/oder Geruchsstoffe, kann der Genuß der Lebensmittel stark beeinträchtigt werden. Noch schwerer wiegend wäre eine Freisetzung von Chemikalien, die die Gesundheit des Konsumenten nachteilig beeinflussen könnten. Eine noch größere Bedeutung spielen diese Überlegungen bei der Verpackung von Arzneimitteln, die strengsten Kontrollen unterliegen. Die Medikamente müssen steril und verschlossen gelagert werden. Das hat zur Folge, dass die Kunststoffverpackungen zunächst durch Strahlung oder Hitzebehandlung entkeimt werden müssen. Bei dieser Behandlung können unerwünschte Substanzen gebildet werden und/oder aus dem Kunststoff freigesetzt werden. Darüber hinaus gibt es ein weites Feld für die Verwendung von emissionsarmen Kunststoffen, um die Akzeptanz beim Verbraucher zu erreichen oder zu erhöhen. Beispielsweise führen Ausdünstungen von Möbeln, Teppichen oder Teppichböden immer wieder zu Beschwerden. Der typische Geruch von Neuwagen, verursacht durch Emission von organischen Verbindungen aus Kunststoffen, die im Fahrzeuginnenraum verwendet werden, wird ebenfalls häufig als störend empfunden.

Bis heute ist nur sehr wenig über die chemische Natur dieser Substanzen bekannt. In der Regel wird es sich um niedermolekulare, flüchtige, organische Verbindungen handeln. Die emittierten Verbindungen können beispielsweise nicht umgesetzte Monomere sein. Ferner werden bei der Polymerisation und/oder der Weiterverarbeitung auch immer zu gewissen Anteilen Oxidations-, Zersetzungs- und andere unerwünschte Nebenprodukte gebildet.

Es sind eine Reihe von Verfahren bekannt, den Austritt von unerwünschten Substanzen aus Kunststoffen zu verringern. Dabei handelt es sich größtenteils um die Anwendung von Adsorptionsmitteln, die, in den Kunststoff eingearbeitet, die Emission der freisetzbaren Verbindungen reduziert. Als Beispiele solcher Adsorbentien können Aktivkohle, Kieselgel, Tonmineralien oder aktiviertes Aluminiumoxid genannt werden. Als weiteres Adsorptionsmittel können hydrophile Zeolithe angewendet werden. Als ein Beispiel sei die Verwendung von hydrophilen Zeolithen zum Entfernen von Trialkanolaminen aus Polyolefinen genannt (US 4,859,733). Diese Mittel haben aber den Nachteil, dass sie in feuchten Umgebungen ihre Wirkung schnell verlieren. Eine Anwendung gerade in Verpackungen von Lebensmitteln und Getränken, die stets einen mehr oder weniger hohen Wasseranteil haben, ist daher nur in Ausnahmefällen sinnvoll.

In dem Dokument EP 0522129 wird ein Prozeß zur Reduzierung von Geruchs- und Geschmacksstoffen bei der Herstellung von Trinkwasserrohren aus Polyethylen oder Polypropylen beschrieben. Während der Polymerisation, also während der Herstellung des Kunststoffes, wird eine Menge von 10 bis 1000 ppm eines hydrophoben Zeolithen hinzu gegeben, der ein molares Si/Al-Verhältnis von mindestens 35, vorzugsweise von 200 bis 500, und eine Mindestporengröße von 5,5 Angström hat, sowie bei 25 °C und einem Wasserdampfpartialdruck von 4.6 torr nicht mehr als 10 Gew.-% bezogen auf das Zeolithgewicht adsorbiert.

Die bekannte Methode hat den Nachteil, dass die hergestellten Kunststoffe eine gelbe bis braune Färbung annehmen. Dieses Phänomen wird insbesondere bei Polyolefinen, zum Beispiel Polypropylen oder Polyethylen, als Polymergrundmaterial beobachtet. Dieses schränkt das Einsatzgebiet der Kunststoffe enorm ein, da auf vielen Gebieten, zum Beispiel der Verpackung von Lebensmitteln und Getränken, farblose und klare Materialien benötigt werden. Färbt man die Kunststoffe, kann die Brillanz der neuen Farbe durch die bereits vorhandene Gelb- bis Braunfärbung beeinträchtigt werden. Bei dem in dem Dokument EP 0522129 beschriebenen Verwendungszweck als Trinkwasserrohr spielt diese Verfärbung beispielsweise keine Rolle, da diesen Materialien ohnehin in der Regel Ruße zugesetzt werden, die das Material schwarz färben.

Es besteht die Aufgabe, einen Kunststoff herzustellen, der einerseits keine oder allenfalls vernachlässigbare Mengen an unerwünschten Substanzen emittiert, andererseits aber auch selber farblos ist und damit ein deutlich breiteres Anwendungsspektrum, als die bekannten Kunststoffe, hat.

Gegenstand der Erfindung sind erfindungsgemäße farblose und emmissionsarme Kunststoffe, welche dadurch gekennzeichnet sind, dass sie mindestens einen Zeolith vom Strukturtyp ZSM-5 enthalten, der eine maximale Adsorptionskapazität für Wasser bei 25 °C und 4,6 torr von 10 Gew.-% bezogen auf die Masse des Zeolithen aufweist.

Die Erfindung zeigt, dass die Verwendung bestimmter Zeolithe farblose Kunststoffe liefert, die ebenfalls nur geringste Mengen an unerwünschten Substanzen emittieren.

Damit Zeolithe die im Kunststoff vorhandenen unerwünschten Substanzen effektiv adsorbieren und auch in feuchten, beziehungsweise nassen Umgebungen dauerhaft binden können, können sie einen hydrophoben Charakter haben. Als ein Maß für die Hydrophobizität kann die Adsorptionskapazität für Wasserdampf unter definierten Bedingungen herangezogen werden. Als hydrophob können Zeolithe angesehen werden, die bei 25 °C und einem Partialdruck des Wasserdampfes von 4,6 torr nicht mehr als 10 Gew.-%, vorzugsweise nicht mehr als 6 Gew.-%, bezogen auf die Massen des Zeolithen, Wasser adsorbieren. Die erfindungsgemäßen Kunststoffe enthalten dementsprechend einen Zeolithen mit dieser Eigenschaft.

Die Erfindung zeigt, dass diese Eigenschaft von solchen Zeolithen erfüllt werden, die relativ aluminiumarm sind. Daher können die verwendeten Zeolithe ein molares Si/Al-Verhältnis von mindestens 15, vorzugsweise von 50 bis 500 aufweisen. Das Si/Al-Verhältnis wird durch das allgemein bekannte nasschemische Verfahren bestimmt. Weiterhin können die Zeolithe eine Porengröße von mindestens 5,5 Angström haben, um organische Verbindungen aufnehmen und dauerhaft binden zu können.

Die Erfindung zeigt, dass Kunststoffe, die einen wie bis hier beschriebenen Zeolithen enthalten, häufig eine gelbe bis braune Verfärbung aufweisen. Dieses hat sich insbesondere bei Polypropylenkunststoffen gezeigt. In Versuchen konnte ausgeschlossen werden, dass diese Verfärbung auf die besondere Zusammensetzung des Polymergrundstoffs zurückzuführen ist: In Polypropylenkunststoffen verschiedener Hersteller zeigte sich wiederholt eine Verfärbung.

Andererseits hat sich überraschenderweise gezeigt, dass bei Verwendung eines Zeolithen vom Strukturtyp ZSM-5 diese Verfärbungen nicht auftreten. In diesem Falle erhält man einen emissionsarmen und farblosen Kunststoff. Definition und Beschreibung dieses Strukturtypen finden sich in W.M. Meier, D.H. Olson: Atlas of Zeolithe Structure, 3^{rd} revised ed., Butterworth-Heinemann, London 1992. Die Herstellung von Zeolithen des Typs ZSM-5 werden in P.A. Jacobs, J.A. Martens: Synthesis of High-Silica Aluminosilicate Zeolites (Stud. Surf. Sci. Catal. 33), Elservier, Amsterdam 1987 beschrieben.

Das erfindungsgemäß erzielte Ergebnis ist überraschend, weil kein offensichtlicher Grund zu finden ist, warum viele aluminiumarme Zeolithe bei Einarbeitung in einen Kunststoff eine Gelb- bis Braunfärbung verursachen, Zeolithe vom Strukturtyp ZSM-5 jedoch nicht. Es kann beispielsweise gezeigt werden, dass der Aluminiumgehalt keine Ursache für die Verfärbung ist.

Es ist vorteilhaft, wenn die verwendeten Zeolithe zunächst durch Erhitzen vollständig von Wasser befreit werden, bevor sie in den Kunststoff eingebracht werden. In einer Ausführungsform der Erfindung kann ein einziger Zeolith vom Typ ZSM-5 oder Gemische aus unterschiedlichen Zeolithen mit ZSM-5-Struktur zum Kunststoff zugegeben werden.

Um die Eigenschaften des Kunststoffs, beispielsweise die Elastizität oder die Bruchfestigkeit, nicht negativ zu beeinflussen, sollte die mittlere Teilchengröße der Zeolithe kleiner als 15 um, vorteilhafterweise zwischen 0,5 und 12 µm sein. Die Erfindung zeigt, dass der für den gewünschten Effekt notwendige Gewichtsanteil der Zeolithe im Kunststoff von dem verwendeten Polymermaterial abhängig ist. Insgesamt ergibt sich ein Bereich für den Zeolithanteil von 0,01 bis 10 Gew.-% in bezug auf die Masse des eingesetzten Kunststoffs, vorzugsweise von 0,01 bis 2 Gew.-%.

Als Grundmaterialien können alle üblichen Kunststoffe benutzt werden, zum Beispiel Polyvinylchlorid, Polyethylenterephthalat, Polystyrol, Acrylnitrilbutadienstyrol (ABS), Polyester, Polyamide, Polyethylen, HDPE, Polypropylen, insbesondere Orientiertes Polypropylen (OPP). In einer Ausführungsform können auch Gemische aus verschiedenen Polymermaterialien verwendet werden.

Die Zeolithe können auf die bekannten Arten in Form eines sogenannten Masterbatches oder als dry-blend (Trockenpulver) den Kunststoffen zugegeben werden. Im ersten Falle wird zunächst auf an sich bekannte Weise ein Masterbatch aus dem zugrunde liegenden Kunststoff und bis zu 50 Gew.-% des Zeolithen hergestellt. Im folgenden Schritt wird ein Gemisch aus dem Masterbatch und dem zugrundeliegenden Kunststoff im für die Endkonzentration des Zeolithen entsprechenden Verhältnis in Standardapparaturen, zum Beispiel einem Extruder, hergestellt und gegebenenfalls gleich weiterverarbeitet. Bei Zugabe des Zeoliths als dry-blend verläuft die Mischung und Weiterverarbeitung in entsprechenden Apparaturen. In beiden Fällen ist es unbedingt notwendig, dass die Zeolithe gleichmäßig im Polymer verteilt werden.

Die Erfindung umfasst weiterhin Masterbatches, die zur Herstellung der beanspruchten Kunststoffe verwendet werden. Diese Masterbatches können einen Zeolithanteil von bis zu 50 Gew.-%, bezogen auf den fertigen Masterbatch, enthalten. Die Masterbatches werden aus dem zugrunde liegenden Kunststoff und dem Zeolith als dry-blend hergestellt, wobei der Zeolith oder die Zeolithe dem Kunststoff im geschmolzenen Zustand zugegeben werden, und das Gemisch sorgfältig gemischt wird.

Ein weiterer Gegenstand der Erfindung sind Masterbatches zur Herstellung von Kunststoffen, welche dadurch gekennzeichnet sind, dass sie mindestens einen Zeolith vom Strukturtyp ZSM-5 enthalten, der eine maximale Adsorptionskapazität für Wasser bei 25 °C und 4,6 torr von 10 Gew.-%, bezogen auf die Masse des Zeolithen, aufweist, und dieser Zeolith zu einem Anteil von maximal 50 Gew.-%, bezogen auf die Masse des fertigen Masterbatch, enthalten ist.

In einer Ausführungsform können die Kunststoffe als Verpackungsmaterial oder Verpackungen aller Art für Lebensmittel und Arzneimittel verwendet werden. Dieses umfaßt beispielsweise Becher, Schachteln, Taschen, Beutel, Schalen, Tüten, Verpackungsbeschichtungen oder Folien. Die Folien können wiederum zur Herstellung von Tüten, Taschen usw. verwendet werden. An diese Verpackungen sind sehr hohe Anforderungen, zum Beispiel in bezug auf Emissionen gestellt, die durch die Zugabe eines Zeolithen mit einem Hydrophobiefaktor von mindestens 1,5 wirksam unterbunden werden.

Die Erfindung umfasst weiterhin die Anwendung der beschriebenen Kunststoffe in einer beliebigen Form, die in Innenräumen von Kraftfahrzeugen Verwendung finden, zum Beispiel als Bauteile oder Dekorationsgegenstand. Ferner umfasst die Erfindung die Anwendung des Kunststoffs in Form von Textilfasern sowie in Produkten, die ganz oder teilweise aus diesen Textilfasern bestehen. Diese können beispielsweise Stoffe, Kleidungsstücke, Teppiche oder Teppichböden sein.

Die erfindungsgemäßen Kunststoffe mit einem Zusatz von Zeolithen vom Strukturtyp ZSM-5 haben folgende Vorteile:

Die Kunststoffe emittieren auch unter feuchten Bedingungen oder bei Anwesenheit von Wasser nur geringste Mengen unerwünschter Substanzen, da die zugegebenen Zeolithe aufgrund ihres hydrophoben Charakters selektiv flüchtige organische Substanzen adsorbieren.

Die erfindungsgemäßen Kunststoffe werden nicht durch die Zugabe der Zeolithe verfärbt, sondern sind farblos. Damit sind die erhaltenen Kunststoffe auch in solchen Bereichen einsetzbar, in denen transparente oder farblose Polymere benötigt werden. Bei einer Färbung der Kunststoffe tritt keine Beeinträchtigung der Farbe auf, die durch eine bereits vorliegende Gelb- oder Braunfärbung verursacht werden kann.

### Beispiele

### Beispiel 1

Herstellung eines Kunststoffs mit DAZ (hohes Modul) Weißheitsgrad bestimmen

### Beispiel 2

Herstellung eines Kunststoffs mit DAZ (niedriges Modul) Weißheitsgrad bestimmen

### Beispiel 3

Herstellung eines Kunststoffs mit DAY (=Vergleichsversuch mit einem Zeolith, Braunfärbung, beziehungsweise Weißheitsgrad bestimmen

### Beispiel 4

Zur Bestimmung, wie stark die neu entwickelten Kunststoffe im Vergleich zu Kunststoffen ohne Zeolithzusatz flüchtige organische Verbindungen emittieren, werden Geruchstests nach der VDA-Empfehlung 270 "Bestimmung des Geruchsverhaltens von Werkstoffen der Kraftfahrzeug-Innenausstattung", Variante C 1 bis 3 durchgeführt. Diese Vorschrift berücksichtigt das Werkstoffverhalten unter verschiedenen Temperatur- und Klimaeinwirkungen.

### Durchführung:

Variante C 1: In einem 1 l großen, luftdicht abgeschlossenen Glas werden 50 ml deionisiertes Wasser und 50 ml (± 5 ml) des Kunststoffs (als Folie oder Granulat) bei 23 °C (± 2 °C) für 24 (± 1h) derart gelagert, dass der Kunststoff und das Wasser nicht in direktem Kontakt stehen. Das Wasser sorgt dafür, dass eine hohe Luftfeuchtigkeit in dem Gefäß vorhanden ist. Nach 24 h beurteilen 4 erfahrene Tester den Geruch der Luft nach folgender Bewertungsskala:
- Note 1:: nicht wahrnehmbar
- Note 2:: wahrnehmbar, nicht störend
- Note 3:: deutlich wahrnehmbar, aber noch nicht störend
- Note 4:: störend
- Note 5:: stark störend
- Note6:: unerträglich

Variante C 2: In einem 1 l großen, luftdicht abgeschlossenen Glas werden 50 ml deionisiertes Wasser und 50 ml (± 5 ml) des Kunststoffs (als Folie oder Granulat) bei 40 °C (± 2 °C) für 24 h (± 1h) so gelagert, dass der Kunststoff und das Wasser nicht in direktem Kontakt stehen. Nach 24 h beurteilen 4 erfahrene Tester den Geruch der Luft nach der Bewertungsskala aus Variante C 1.

Variante C 3: In einem 1 l großen, luftdicht abgeschlossenen Glas werden 50 ml (± 5 ml) des Kunststoffs (als Folie oder Granulat) - ohne Zugabe von Wasser - bei 80 °C (± 2 °C) für 2 h (± 10 min) gelagert. Vier erfahrene Tester beurteilen den Geruch der Luft nach der Bewertungsskala aus Variante C 1.

Das Bewertungsergebnis wird unter Hinweis auf das Prüfverfahren ("Geruchstest VDA 270") und der angewendeten Variante (C 1, C 2 oder C 3) als das arithmetische Mittel der Einzelbenotungen angegeben, wobei beim Runden des Mittelwerts in halben Notenschritten abgestuft wird. Beispiel: Geruchstest VDA 270 C 1 - Note 3,5

## Patentansprüche

1. Farblose und emissionsarme Kunststoffe, **dadurch gekennzeichnet, dass** sie mindestens einen Zeolith vom Strukturtyp ZSM-5 enthalten, der eine maximale Adsorptionskapazität für Wasser bei 25 °C und 4,6 torr von 10 Gew.-% bezogen auf die Masse des Zeolithen aufweist.

2. Kunststoffe nach Anspruch 1, **dadurch gekennzeichnet, dass** der dem Kunststoff zugegebene Zeolith ein molares Si/Al-Verhältnis mindestens 15, vorzugsweise von 50 bis 500 aufweist von.

3. Kunststoffe nach Anspruch 1 bis 2, **dadurch gekennzeichnet, dass** der Zeolithanteil im fertigen Kunststoff 0,01 bis 10 Gew.-%, bezogen auf die Masse des eingesetzten Kunststoffs, beträgt.

4. Kunststoffe nach Anspruch 1 bis 3, **dadurch gekennzeichnet, dass** der Zeolithanteil im fertigen Kunststoff 0,01 bis 2 Gew.-%, bezogen auf die Masse des eingesetzten Kunststoffs, beträgt.

5. Kunststoffe nach Anspruch 1 bis 4, **dadurch gekennzeichnet, dass** die enthaltenen Zeolithe eine mittlere Teilchengröße von kleiner als 15 um, vorteilhafterweise zwischen 0,5 und 12 um besitzen.

6. Kunststoffe nach Anspruch 1 bis 5, **dadurch gekennzeichnet, dass** das Polymermaterial Polyvinylchlorid, Polyethylenterephthalat, Polystyrol, Acrylnitrilbutadienstyrol (ABS), Polyester, Polyamide, HDPE, Polypropylen, insbesondere Orientiertes Polypropylen (OPP), Polyethylen oder ein Gemisch einer dieser Materialien mit mindestens einem beliebig anderen Polymermaterial ist.

7. Verpackungsmaterialien für Lebensmittel und/oder Arzneimittel **dadurch gekennzeichnet, dass** sie ganz oder teilweise aus Kunststoffen nach Anspruch 1 bis 6 bestehen.

8. Bauteile oder Dekorationsgegenstände von Innenräumen von Kraftfahrzeugen, **dadurch gekennzeichnet, dass** sie ganz oder teilweise aus Kunststoffen nach Anspruch 1 bis 6 bestehen.

9. Textilfasern sowie daraus ganz oder teilweise hergestellte Produkte, **dadurch gekennzeichnet, dass** sie ganz oder teilweise aus den Kunststoffen nach Anspruch 1 bis 6 bestehen.

10. Masterbatches zur Herstellung von Kunststoffen, **dadurch gekennzeichnet, dass** sie mindestens einen Zeolith vom Strukturtyp ZSM-5 enthalten, der eine maximale Adsorptionskapazität für Wasser bei 25 °C und 4,6 torr von 10 Gew.-%, bezogen auf die Masse des Zeolithen, aufweist, und dieser Zeolith zu einem Anteil von maximal 50 Gew.-%, bezogen auf die Masse des fertigen Masterbatch, enthalten ist.
